# EUROPÄISCHE PATENTSCHRIFT

(11) **EP 1 032 478 B1**
(45) Veröffentlichungstag und Bekanntmachung des Hinweises auf die Patenterteilung: **15.01.2003**
(21) Anmeldenummer: 98965175.7
(22) Anmeldetag: 25.11.1998
(51) Int. Cl.: B07C 5/38, B07C 5/36

(54) **VERFAHREN ZUR AUTOMATISIERTEN GRUPPIERUNG VON OBJEKTEN**
METHOD FOR THE AUTOMATED GROUPING OF OBJECTS
PROCEDE DE GROUPEMENT AUTOMATISE D'OBJETS

(30) Priorität: 28.11.1997 DE 19752908
(43) Veröffentlichungstag der Anmeldung: 06.09.2000
(73) Patentinhaber: imt robot AG, 70736 Fellbach (DE)
(72) Erfinder: Nagler, Peter, 70736 Fellbach (DE)
(74) Vertreter: Wasmuth, Rolf, Dipl.-Ing.
(86) Internationale Anmeldenummer: EP9807586
(87) Internationale Veröffentlichungsnummer: WO99028057

(56) Entgegenhaltungen:
- WO-A-91/11885
- WO-A-94/20230
- DE-A- 4 415 686

## Beschreibung

Die Erfindung betrifft ein Verfahren zur automatisierten Gruppierung von Objekten, welche in stetigem Förderfluß in zufälliger Ordnung einem Zuführband aufgegeben und zu einer Gruppiereinrichtung gefördert werden, gemäß dem Oberbegriff des Patentanspruchs 1.

Ein Verfahren gemäß dem Oberbegriff des Anspruchs 1 ist aus WO 9 118 855 A bekannt.

Die automatisierte Handhabung wird von einer Steuereinheit der Gruppiereinrichtung koordiniert. Eine Erkennungseinrichtung erfaßt jeweils die Lage und die Position der ankommenden Objekte auf dem Zuführband und meldet diese fortlaufend der Steuereinheit, welche unter Berücksichtigung der Bandgeschwindigkeit Steuerbefehle für eine Handhabungseinrichtung erzeugt. Es ist dabei üblich, aus der erfaßten Lage und Position der ankommenden Objekte deren jeweilige virtuelle Abbildposition auf dem Zuführband im Griffbereich der Handhabungseinrichtung zu ermitteln. Aus der virtuellen Information und der Bandgeschwindigkeit wird die tatsächliche Lage und Position der betreffenden Objekte bestimmt, in der sie sich mit Bandgeschwindigkeit bewegt zum vorgegebenen Zugriffzeitpunkt im Griffbereich der Handhabungseinrichtung befinden. Die Handhabungseinrichtung kann in ihrem Griffbereich jedes Objekt anfahren und sortiert diese auf einem weiteren Förderband in den vorgegebenen, gruppierten Ordnungszustand. Es ist bekannt, daß auch große Mengen in zufälliger Ordnung zugeförderter Objekte sortiert werden können, wenn die Handhabungseinrichtung die Objekte vom Zuführband greift und auf dem weiteren Förderband, dem Sortierband ablegt. Die Handhabungseinrichtung stellt die Objekte auf dem Sortierband gemäß einer vorgegebenen Sortiervorschrift zusammen. Auf dem Sortierband werden die Objekte in sortiertem Ordnungszustand gruppiert liegend weiterbefördert.

Der vorliegenden Erfindung liegt die Aufgabe zugrunde, ein Verfahren zur automatisierten Gruppierung von Objekten der gattungsgemäßen Art zu schaffen, welches rasch arbeitet und mit geringem baulichen Aufwand durchführbar ist.

Diese Aufgabe wird erfindungsgemäß mit den Merkmalen des Anspruchs 1 gelöst.

Der Erfindung liegt die Erkenntnis zugrunde, daß die zwischen den in zufälliger Ordnung liegenden Objekten in gleichfalls zufälliger Positionsverteilung Flächen auf dem Zuführband gegeben sind, auf denen sortierte Objekte gruppiert ablegbar sind. Darüber hinaus werden durch die Handhabung einzelner Objekte Ergänzungsflächen frei, welche anschließend zur Gruppierung weiterer Objekte genutzt werden können. Bei dem erfindungsgemäßen Verfahren wertet die Steuereinheit über die Erfassung der jeweiligen Lage und der Position der ankommenden Objekte den zufälligen Ordnungszustand aller Objekte auf dem Zuführband und ermittelt daraus zufällig gegebene Sortierpositionen mit ausreichender Fläche für jeweils eine Gruppe. Die Objekte werden auf dem Zuführband sortiert und gruppiert liegend weiterbefördert, wodurch der bisher erforderliche bauliche Aufwand zur Durchführung des automatisierten Gruppierungsvorganges verringert ist. Insbesondere kann auf das bisher erforderliche Sortierband verzichtet werden, da das Zuführband selbst das Sortierband bildet. Weiterhin wird mit dem erfindungsgemäßen Verfahren die Leistungsfähigkeit der Gruppiereinrichtung erhöht, da die Handhabungseinrichtung durchschnittlich kurze Wege zur Sortierung der ankommenden Objekte zurücklegen muß und somit der Gruppierungsvorgang schnell ablaufen kann.

Vorteilhaft wird ein Objekt als Kennobjekt ausgewählt, welches die Sortierposition bestimmt und dem anschließend weitere Objekte gemäß der vorgegebenen Gruppenordnung zusortiert werden. Das Kennobjekt verbleibt bei der Sortierung in der ursprünglichen, zufälligen Position auf dem Zuführband, wodurch bei der Gruppierung lediglich die weiteren Objekte gehandhabt werden müssen. Insbesondere bei geringen Stückzahlen pro Gruppe kann das Gruppieren der Objekte auf dem Zuführband sehr rasch ausgeführt werden, da ein Handhabungsvorgang pro Gruppe entfällt, nämlich der des Kennobjektes.

Die weiteren Objekte einer Gruppe können an der Lage des Kennobjektes ausgerichtet geordnet werden. Die zufällige Lage des Kennobjektes bestimmt die Lage der weiteren Objekte, welche in der betroffenen Gruppe entsprechend der vorgegebenen Zuordnungsvorschrift zusammengestellt sind. Die sortierten Objekte liegen also jeweils in ihren Gruppen entsprechend dem vorgegebenen Ordnungszustand, in dem sie gegebenenfalls einer Weiterbearbeitung zugeführt werden können. Die Position und die Ausrichtung jeder Gruppe hängt von der Position und der Lage der Kennobjekte ab, wobei auch Gruppen nebeneinander auf dem Zuführband zusammengestellt werden und somit die Transport-Leistungsfähigkeit des Zuführbandes ausgenutzt wird. Das Vorliegen mehrerer sortierter Gruppen nebeneinander ist gemäß der Zufälligkeit der Ausrichtung entsprechend wahrscheinlich, wodurch die gegebene Breite des Zuführbandes ausgenutzt wird.

Vorteilhaft wertet die Steuereinheit den zufälligen Ordnungszustand auf dem Zuführband derart aus, daß bedarfsweise die Lage des ausgewählten Kennobjektes korrigiert werden kann, beispielsweise zur Schaffung einer für die anschließende Gruppierung günstigen Situation. Eine Korrektur der Lage des ausgewählten Kennobjektes durch eine entsprechende Ansteuerung der Handhabungseinrichtung erfolgt auch, wenn dem Auswertungsergebnis des zufälligen Ordnungszustandes entnehmbar ist, daß das ausgewählte Kennobjekt benachbart des Randes des Zuführbandes liegt und die der gegebenen Lage entsprechende Fläche für eine Positionierung der vorgesehenen Anzahl weiterer Objekte der betreffenden Gruppe nicht ausreicht. Jeder Gruppe werden vorteilhaft solche Objekte zugeordnet, welche im zugeförderten Ordnungszustand mit möglichst geringem Abstand zur ermittelten Sortierposition (Kennobjekt) auf dem Zuführband liegen, wodurch entsprechend kurze Wege der Handhabungseinrichtung bei der Sortierung erforderlich sind.

Ein Ausführungsbeispiel der Erfindung ist nachstehend anhand der Zeichnung näher erläutert. Es zeigen:
- Fig. 1: in schematischer Darstellung eine automatisierte Gruppierung von Objekten gemäß dem Stand der Technik,
- Fig. 2: eine Gruppiereinrichtung zur Durchführung des erfindungsgemäßen Verfahrens.

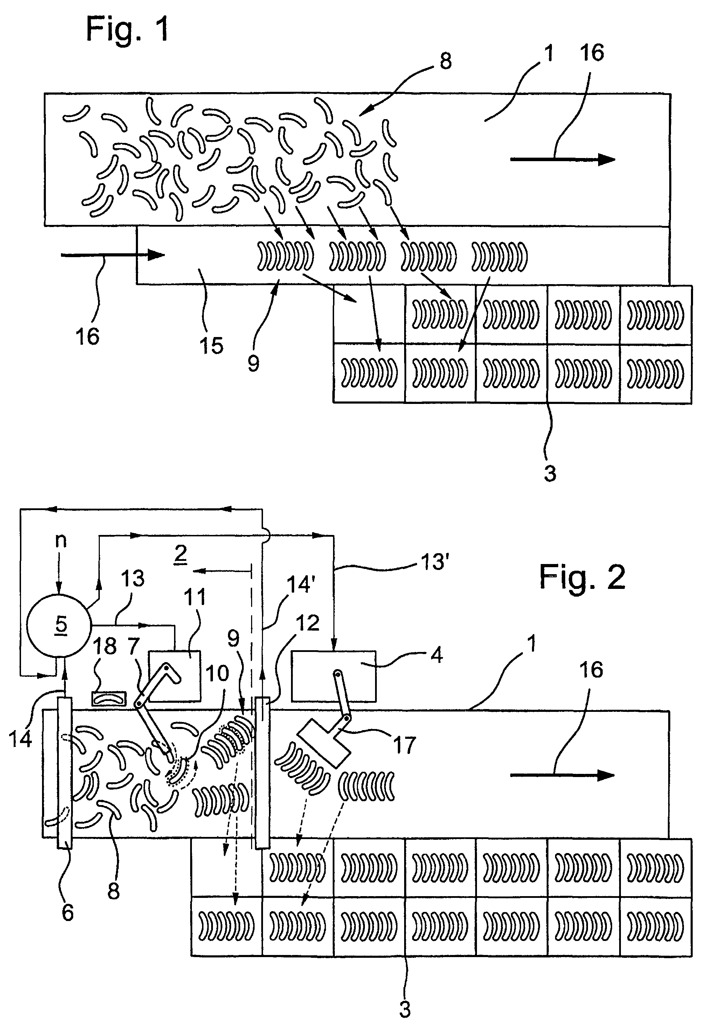

Im gezeigten Ausführungsbeispiel der Erfindung handelt es sich bei den automatisiert zu gruppierenden Objekten um Würste, welche nach ihrer Herstellung einem Zuführband 1 aufgegeben werden und in gruppiertem Ordnungszustand einer Weiterbehandlung zugeführt werden. Nach der Herstellung und einem an die Produktion abschließenden Trennvorgang der zusammenhängenden Würste werden die Würste 8 dem Zuführband 1 in zufälliger Ordnung aufgegeben. Die Funktion der automatischen Gruppierung der Würste besteht darin, die in zufälliger Ordnung auf dem Zuführband liegenden Würste 8 in ausgerichteten Gruppen zu hier je sechs Würsten zusammenzustellen, damit diese anschließend gemeinsam als Wurstpaket 9 verpackt werden können. Bei der in Fig. 1 dargestellten Gruppierung gemäß dem Stand der Technik werden die Würste 8 von einer Handhabungseinrichtung vom Zuführband abgeholt und auf einem in gleicher Richtung wie das Zuführband 1 laufenden weiteren Förderband 15 abgelegt. Die Handhabungseinrichtung ist dabei derart programmiert bzw. von einer Steuereinheit gesteuert, daß die vom Zuführband 1 abgegriffenen Würste auf dem Sortierband 15 nebeneinander und jeweils in Gruppen mit der vorgegebenen Anzahl von sechs Würsten abgelegt werden. Die gruppenweise abgelegten und ausgerichteten Würste werden von einer weiteren Handhabungseinrichtung in eine Verpackungsmaschine 3 eingelegt. Zur automatisierten Gruppierung der Würste wird die Lage und die Position der ankommenden Würste auf dem Zuführband 1 erfaßt und unter Berücksichtigung der Bandgeschwindigkeit die entsprechende Abbildposition der einzelnen Würste 8 im Fangbereich der Handhabungseinrichtung ermittelt.

Wie aus Fig. 2 ersichtlich ist, besteht eine Gruppiereinrichtung 2 zur Durchführung des erfindungsgemäßen Verfahrens zur automatisierten Gruppierung der Würste 8 aus einer Erkennungseinrichtung 6 und einer Steuereinheit 5 sowie einem Roboter 11 zur Handhabung der auf dem Zuführband 1 liegenden Wurstware. Die Erkennungseinrichtung 6 erfaßt beispielsweise mit optischen Mitteln die Lage und die Position der ankommenden Würste 8 auf dem Zuführband und meldet ihre Sensorsignale 14 einer Steuereinheit 5. Die Erkennungseinrichtung 6 arbeitet zweckmäßig im Durchlichtverfahren, wobei die Konturen der auf dem Zuführband 1 liegenden Objekte erfaßt werden. Die Steuereinheit 5 erzeugt Steuersignale 13 für einen Roboter 11 zur Handhabung der auf dem Zuführband 1 liegenden Würste 8 mittels einer Handhabungseinrichtung 7. Aus den Sensorsignalen 14 der Erkennungseinrichtung 6 wird eine virtuelle Lage und Position der einzelnen Würste 8 ermittelt, welche unter Berücksichtigung der Bandgeschwindigkeit n in die in Bewegungsrichtung 16 des Zuführbandes versetzte, tatsächliche Lage und Position der Würste 8 zu bestimmten Zeitpunkten umgerechnet werden kann. Ist der Zugriffszeitpunkt des Roboters 11 für eine bestimmte Wurst 8 festgelegt, so kann aus der virtuellen Information die tatsächliche Lage und Position der betreffenden Wurst im Fangbereich des Roboters 11 zu diesem Zeitpunkt bestimmt werden, welche diesen in die Lage versetzen, diese und auf gleiche Weise jede beliebige Wurst zu handhaben. Die Bandgeschwindigkeit n des Zuführbandes 1 wird mit einem hier nicht dargestellten Geschwindigkeitsmeßgerät ermittelt und wird der Steuereinheit 5 zur Umrechnung der virtuellen Informationen eingegeben.

Erfindungsgemäß werden die in zufälliger Ordnung der Gruppiereinrichtung 2 zugeförderten Würste im Unterschied zu dem in Fig. 1 gezeigten Stand der Technik auf dem Zuführband 1 in den gruppierten Ordnungszustand sortiert und anschließend auf dem Zuführband 1 gruppiert liegend weiterbefördert. Im gezeigten Ausführungsbeispiel sei wieder als sortierter Ordnungszustand die Gruppierung der Würste in dichter Packung zu je sechs Stück vorgegeben. Die Steuereinheit ermittelt aus den Sensorsignalen 14 der Erkennungseinrichtung 6 den gesamten Ordnungszustand auf dem Zuführband 1 und wertet die zufällige Ordnung aus, wobei zufällig gegebene Sortierpositionen mit ausreichender Fläche für jeweils eine Gruppe ermittelt werden. Die Steuereinheit wählt pro Gruppe eine (zufällig positionierte) Wurst als Kennobjekt 10 aus, welches die Sortierposition bestimmt und dem weitere fünf Würste zusortiert werden. Die als Kennobjekt 10 ausgewählte Wurst ist in der Zeichnung punktiert umrandet dargestellt. Die Auswahl der als Kennobjekt geeigneten Würste erfolgt unter Berücksichtigung des gesamten Ordnungszustandes auf dem Zuführband 1, um sicherzustellen, daß genügend Ware zur Zusammenstellung eines Paketes in der Umgebung des als Sortierposition ausgewählten Objektes zur Verfügung stehen. Neben die als Sortierposition ausgewählte Wurst 10, gegebenenfalls beidseitig, legt der Roboter 11 fünf weitere Würste, wobei jeweils einer Gruppe solche Würste zugeordnet werden, deren relative Lage und Position zum entsprechenden physikalischen Kennobjekt 10 möglichst geringfügig unterschiedlich sind. Durch kurze Transportwege und geringe Drehbewegungen der Handhabungseinrichtung, um die gegriffene Wurst in die am Kennobjekt ausgerichtete Lage zu bringen, wird der Gruppierungsvorgang beschleunigt. Bei der Gruppenzuordnung, d.h. der Zusammenstellung der Wurstpakete auf der Sortierposition werden bevorzugt einer Gruppe solche Würste 8 zusortiert, deren Entfernung aus der ursprünglichen Position Fläche zur Ablage weiterer Würste 8 derselben Gruppe 9 schafft. Bei einer derartigen Festlegung der Reihenfolge der Handhabungen werden solche Würste, die zufällig teilweise in der für die Gruppierung vorgesehenen Fläche liegen, bevorzugt sortiert und mit kurzem Transportweg an die zugewandte Seite des Kennobjektes 10 angelegt, so daß Kollisionen ausgeschlossen sind und immer freie Ablageflächen auf dem Band vorgefunden werden. Die Sortierung und damit die Entfernung solcher Würste aus der die Gruppierung störenden ursprünglichen Position erfolgt an einer zufällig sich aus dem Ordnungszustand ergebenden Reihenfolgenstelle, jedoch spätestens in dem Sortierschritt, der der Ablage einer sortierten Wurst in dieser Position vorausgeht. Bei der Bestimmung der Reihenfolge der Handhabungen der einzelnen Würste wird als Kriterium die zufällige Flächenverteilung auf dem Zuführband 1, das Anstreben kurzer Transportwege beim Sortieren und auch die sich zufällig aus räumlicher Anordnung der Würste ergebende Handhabungsfolge berücksichtigt.

Zur Zusammenstellung einer Gruppe von sechs Würsten sind lediglich fünf Handhabungsvorgänge durchzuführen, da die als Kennobjekt 10 ausgewählte Wurst in ihrer ursprünglichen Position und Lage auf dem Zuführband 1 bei der Sortierung verbleibt. Durch das Anlegen weiterer Würste wird auf dem zurückliegenden Abschnitt des Zuführbandes 1, dem die jeweils gehandhabte Wurst entnommen wird, Fläche zur Sortierung weiterer Würste in die vorgegebene Gruppenordnung frei. Die Lage der als Kennobjekt 10 ausgewählten Wurst kann bedarfsweise korrigiert werden, wenn sich aus der Auswertung ergibt, daß in ihrer ursprünglichen Lage zu wenig Sortierfläche zur Zusammenstellung einer Wurstgruppe ergibt, etwa am Rand des Zuführbandes 1.

Die Gruppiereinrichtung 2 umfaßt einen nicht dargestellten Pufferspeicher, in dem die Handhabungseinrichtung 7 bedarfsweise Würste 8 ablegt, die im zufälligen Ordnungszustand deutlich abseits weiterer Waren isoliert liegen und unter Berücksichtigung der vorgegebenen Sortiervorschriften nur mit großem Handhabungsaufwand sortiert werden könnten. Wird eine solche isolierte Lage einer Wurst oder einer gemeinsam isolierten Lage einer nicht der erforderlichen Gruppenzahl entsprechenden Anzahl von Würsten bei der Auswertung des zufälligen Ordnungszustandes festgestellt, so daß die erforderliche aufwendige Handhabung dieser Würste den fortlaufenden Gruppierungsprozeß der unsortierten Ware verzögern würde, so wird diese Ware im Pufferspeicher zwischengelagert und gelegentlich zur Ergänzung einer Gruppe abgeholt.

Mit dem erfindungsgemäßen Verfahren können auch große Warenmengen auf dem Zuführband 1 sortiert werden, da mehrere Sortierpositionen nebeneinander auf dem Band gewählt werden können und das Zuführband die gesamte Warenmenge, die unsortiert zugeführt wurde, in gruppiertem Zustand weiterbefördern kann. Eine Hintereinanderreihung der Wurstpakete, wie sie bei bekannten Verfahren (Fig. 1) erforderlich ist, welche das Platzangebot des Zuführbandes 1 nur ausschnittsweise nutzt und daher ein zusätzliches Sortierband erforderlich macht, ist beim erfindungsgemäßen Verfahren nicht vorgesehen. Vielmehr sind die nach der Gruppierung zusammengestellten Wurstpakete 9 frei auf der Fläche des Zuführbandes 1 orientiert. Ihre Ausrichtung ergibt sich zufällig aus der ursprünglichen, d.h. zufälligen Lage der als Kennobjekt 10 ausgewählten Wurst.

Der Roboter 11 kann zur Leistungssteigerung kaskadiert werden, um das erfindungsgemäße Verfahren zur Gruppierung der Würste durchführen.

Die frei orientiert auf dem Zuführband 1 weiterbeförderte Wurstgruppen mit je sechs sortierten Würsten werden von einer weiteren Handhabungseinrichtung 17 vom Zuführband 1 abgeholt und einer Paketverpackung zugeführt. Die Handhabungseinrichtung 17 ist Teil eines Einlegegerätes 4, welches die auf dem Zuführband 1 gruppierten Würste gemeinsam abholt und in eine Verpackungsmaschine 3 einlegt. Die Position und Ausrichtung der jeweiligen Wurstgruppen 9 wird von einer weiteren Erkennungseinrichtung 12 erfaßt, welche der Steuereinheit 5 ein entsprechendes Informationssignal 14' eingibt. Die Steuereinheit 5 erzeugt Stellbefehle 13' für das Einlegegerät 4 zum Greifen der in bekannter Position liegenden Wurstgruppen 9. Die Steuereinheit 5 koordiniert dabei auch die Steuerungen mehrerer Einlegegeräte mit entsprechend hoher Gruppierleistung. Insbesondere bei Einsatz eines einzigen Einlegegerätes 4 kann jedoch auch die Lageinformation 14' seitens der Erkennungseinrichtung 12 direkt dem Einlegegerät 4 vorgegeben werden.

Bei der Auswertung des zufälligen Ordnungszustandes der ankommenden Würste kann gleichzeitig Ausschußware identifiziert werden. Die Ausschußwürste werden bei der Sortierung nicht berücksichtigt. Sie können beispielsweise auf dem Zuführband nach Abholung der gruppierten Wurstpakete verbleiben und am Abwurfende des Bandes gesammelt werden.

Mit dem erfindungsgemäßen Verfahren können auch verschiedenartige Objekte gruppiert werden zu Gruppen mit vorgebbarer Kombination der Objektarten. Beim gezeigten Ausführungsbeispiel der Sortierung von Würsten können gleichzeitig verschiedene Wurstarten, die gemeinsam dem Zuführband in zufälliger Ordnung aufgegeben werden, zu Gruppen mit jeweils gleicher Wurstart gruppiert werden. Weiterhin ist auch möglich, daß der Steuereinheit 5 eine oder mehrere Gruppenordnungen vorgegeben werden, in die die Würste 8 gruppiert werden. Neben dem im Ausführungsbeispiel gezeigten Ordnungszustand mit nebeneinander in einer Packung liegenden Würsten 8 können die Würste 8 beispielsweise innerhalb einer Gruppe kreisförmig angeordnet sein. Dabei kann auch berücksichtigt werden, daß solche Würste 8, welche außerhalb eines vorgebbaren Toleranzrahmens liegen, also entweder zu klein oder zu groß sind als der leicht gruppierbare Durchschnittswert, an einer von der Steuereinheit 5 für günstig befundenen Stelle innerhalb des Gruppiervorganges einer bestimmten Gruppe zugeordnet werden. Besonders zweckmäßig werden dabei zu kleine oder zu große Objekte einer Gruppe als letztes Objekt zugeordnet. Gleichfalls ist mit dem erfindungsgemäßen Verfahren möglich, mehrere Warenarten gleichzeitig zu gruppieren und zu Produktkombinationen zusammenzufassen.

Zweckmäßig sind der Steuereinheit 5 eine oder mehrere Sortiervorschriften zur Gruppierung der Objekte 8 anhand der von der Erkennungseinrichtung 6 erfaßten Lage auf dem Zuführband 1 sowie weiter eine Prioritätsanweisung vorgebbar, nach der eine Reihenfolge festgelegt ist, in der die Sortiervorschriften zu berücksichtigen sind. Die Steuereinheit ermittelt dabei unter Berücksichtigung der Sortiervorschriften die günstigste Reihenfolge der Handhabungsvorgänge im Hinblick auf möglichst schnelle Sortierung mit kurzen Transportwegen der zu gruppierenden Würste und einfachen Handhabungsvorgängen. Als Sortiervorschrift können der Steuereinheit 5 eine oder mehrere gewünschte Gruppenordnungen der fertig sortierten Würste vorgegeben werden, beispielsweise können die Würste wie im Ausführungsbeispiel gezeigt nebeneinander sortiert oder auch räumlich angeordnet werden, d.h. innerhalb einer Gruppe werden mehrere Lagen der Würste 8 übereinander gruppiert. Besonders vorteilhaft können der Steuereinheit 5 als weiteres Sortierkriterium zu bevorzugende Lagen und Positionen auf dem Zuführband 1 im Hinblick auf einfache Handhabungsvorgänge des nachfolgenden Einlegegerätes 4 vorgegeben werden. Dabei können die Wurstgruppen beispielsweise der Länge nach sortiert oder etwa auf einer bestimmten Seite des Zuführbandes abgelegt werden, nämlich auf der Seite, an der sich das Einlegegerät bzw. die Einlegegeräte befinden.

Die Steuereinheit 5 ermittelt in Abhängigkeit von dem eingegebenen Zufallsordnungszustand der Würste 8 auf dem Zuführband 1 vor dem Beginn der jeweiligen Handhabungsvorgänge die Reihenfolge der Gruppierungsschritte der einzelnen Objekte einer gesamten Gruppe und selektiert dabei zwischen mehreren gefundenen Möglichkeiten die günstigste im Hinblick auf eine zweckmäßig möglichst hohe Sortierleistung der Sortieranlage. Wird eine bzw. gegebenenfalls auch mehrere Würste 8 von der Steuereinheit als nur unter großem Handhabungsaufwand einer der augenblicklich vorgesehenen Gruppen zuweisbar erkannt, so wird die betreffende Wurst 8 zur späteren Abholung und Gruppierung in dem Pufferspeicher 18 abgelegt. Besonders zweckmäßig kann der Steuereinheit 5 als Sortierkriterium ein Gesamtzustand der Gruppen vorgegeben werden, welcher an das Volumen der einzelnen Objekte innerhalb einer Gruppe geknüpft ist. Beispielsweise ist dadurch möglich, die Würste 8 bzw. auch Objekte anderer Art nach einem vorgegebenen Gesamtgewicht einer Gruppe zu sortieren. Die Steuereinheit 5 ermittelt das jeweilige Volumen der zugeführten Würste aus der jeweiligen Kontur, welche von der Erkennungseinrichtung 6 eingangs erfaßt wird. Aus den erfaßten Abmessungen der Würste läßt sich ein Rückschluß auf das jeweilige Gewicht ziehen, wobei aufgrund der annähernden Kreisquerschnittsform der Würste 8 die erkannte Breite mit der Höhe, d.h. dem Durchmesser gleichgesetzt wird. Die Kenntnis des Durchmessers der jeweiligen Wurst 8 wird auch beim Greifen der jeweiligen Wurst berücksichtigt, wobei die Handhabungseinrichtung exakt auf die erforderliche Höhe zum Greifen der Wurst fahrbar ist. Insbesondere beim Sortieren von toleranzbehafteten Objekten kann auf diese Weise immer die erforderliche Höhe zum Greifen der Objekte angefahren werden. Beim Ausführungsbeispiel der Sortierung von Würsten ist somit ausgeschlossen, daß im Falle von zu kleinen Würsten die Handhabungseinrichtung fehlgreift und zu große Würste beim Greifen gequetscht werden. Auch die Kenntnis der Krümmung, der Dicke und sonstigen Maße der einzelnen Würste kann zur Optimierung der Handhabungsbewegungen herangezogen werden.

Der Steuereinheit des erfindungsgemäßen Sortierverfahrens kann eine Vielfalt von Sortiervorschriften vorgegeben werden; möglich ist auch die Berücksichtigung der Werkzeugkonturen des Einlegegerätes 4, wobei die Gruppen in eine für die Kinematik des Einlegers 4 günstige Position auf dem Zuführband 1 gebracht werden. Die erfindungsgemäße Gruppierung der Objekte auf dem Zuführband schafft die Möglichkeit der vorausschauenden Gruppierung, um eine konstante Sortierleistung zu gewährleisten. Dabei kann schon frühzeitig berücksichtigt werden, wenn beispielsweise zeitlich unterschiedliche Massenströme der zu sortierenden Objekte auf dem Zuführband 1 erkannt werden. Die Steuereinheit reagiert in einem solchen Fall mit einem entsprechenden Abgleich der Stellbefehle für die Roboter 11, um einen kontinuierlichen Sortierbetrieb aufrechtzuerhalten. Die gesamte Gruppierleistung kann weiter dadurch gesteigert werden, daß wiederkehrende Lagesituationen der Würste 8 auf dem Zuführband erkannt und die einmal als optimal errechneten Sortierfolgen der einzelnen Würste zur späteren Wiederverwendung abgespeichert werden. Neben der Erkennung wiederkehrender Sortiersituationen können weitere künstliche Lernmechanismen in der Steuereinheit 5 implementiert sein, welche auf der statistischen Auswertung der Sortiervorgänge beruhen.

Das erfindungsgemäße Verfahren zur automatisierten Gruppierung von Objekten ist für eine Vielzahl von Handelsartikeln einsetzbar, welche auf einem Band unsortiert ankommen, wie auch andere Nahrungsmittel als Würste, für Kunststoffteile oder Metallteile, welche einer späteren Bearbeitung gruppiert zugeführt werden sollen. Die Handhabungseinrichtung 17 kann auch für andere anschließende Bearbeitungen der erfindungsgemäß gruppierten Objekte vorgesehen sein, bei der die Objekte gruppenweise gehandhabt werden, als im Anwendungsfall der Fig. 2, wo die Handhabungseinrichtung Bestandteil eines Einlegegerätes 4 zum Einlegen der gruppierten Würste in die Verpackungsmaschine 3 ist.

## Patentansprüche

1. Verfahren zur automatisierten Gruppierung von Objekten (8), welche in stetigem Förderfluß in zufälliger Ordnung einem Zuführband (1) aufgegeben und zu einer Gruppiereinrichtung (2) gefördert werden, wobei eine Erkennungseinrichtung (6) die Lage und die Position der ankommenden Objekte (8) auf dem Zuführband (1) erfaßt und einer die Bandgeschwindigkeit (n) berücksichtigenden Steuereinheit (5) für eine Handhabungseinrichtung (7) meldet, welche die Objekte (8) in einen gruppierten Ordnungszustand sortiert,
**dadurch gekennzeichnet, daß** die Objekte (8) auf dem Zuführband (1) gruppiert und weiterbefördert werden, wobei die Steuereinheit den zufälligen Ordnungszustand auf dem Zuführband (1) auswertet und die Lage einer Gruppe (9) auf dem Zuführband (1) bestimmt.

2. Verfahren nach Anspruch 1,
**dadurch gekennzeichnet, daß** die Objekte (8) in dichter Packung gruppiert werden.

3. Verfahren nach Anspruch 1 oder 2,
**dadurch gekennzeichnet, daß** der Steuereinheit eine vorgesehene Lage der Objekte (8) innerhalb einer Gruppe (9) vorgegeben wird.

4. Verfahren nach einem der Ansprüche 1 bis 3,
**dadurch gekennzeichnet, daß** die Objekte (8) in jeweils gleicher Lage innerhalb einer Gruppe (9) zusammengelegt werden.

5. Verfahren nach einem der Ansprüche 1 bis 4,
**dadurch gekennzeichnet, daß** die Objekte (8) gleichartig sind.

6. Verfahren nach einem der Ansprüche 1 bis 4,
**dadurch gekennzeichnet, daß** verschiedenartige Objekte (8) gruppiert werden zu Gruppen (9) mit vorgebbarer Kombination der Objektarten.

7. Verfahren nach einem der Ansprüche 1 bis 6,
**dadurch gekennzeichnet, daß** der Steuereinheit (5) eine oder mehrere Gruppenanordnungen vorgegeben werden, in die die Objekte (8) gruppiert werden.

8. Verfahren nach einem der Ansprüche 1 bis 7,
**dadurch gekennzeichnet, daß** ein Objekt als Kennobjekt (10) ausgewählt wird, welches die Sortierposition bestimmt und dem weitere Objekte (8) gemäß der vorgegebenen Gruppenordnung zusortiert werden.

9. Verfahren nach Anspruch 8,
**dadurch gekennzeichnet, daß** die Lage des Kennobjektes (10) bedarfsweise korrigiert wird.

10. Verfahren nach Anspruch 8 oder 9,
**dadurch gekennzeichnet, daß** die weiteren Objekte (8) einer Gruppe (9) ausgerichtet an der Lage des Kennobjektes (10) geordnet werden.

11. Verfahren nach einem der Ansprüche 8 bis 10,
**dadurch gekennzeichnet, daß** der Steuereinheit (5) eine oder mehrere Sortiervorschriften zur Gruppierung der Objekte (8) anhand der von der Erkennungseinrichtung (6) erfaßten Lage auf dem Zuführband (1) und eine Prioritätsanweisung vorgegeben werden, nach der die Reihenfolge der Berücksichtigung der Sortiervorschriften festgelegt ist.

12. Verfahren nach Anspruch 11,
**dadurch gekennzeichnet, daß** einer Gruppe solche Objekte (8) zugeordnet werden, deren relative Lage und Position zum entsprechenden Kennobjekt (10) möglichst geringfügig unterschiedlich sind.

13. Verfahren nach Anspruch 12,
**dadurch gekennzeichnet, daß** bei der Gruppenzuordnung der Objekte (8) eine sich aus dem zufälligen Ordnungszustand ergebende Reihenfolge der Handhabungen der einzelnen Objekte (8) berücksichtigt wird.

14. Verfahren nach Anspruch 12 oder 13,
**dadurch gekennzeichnet, daß** einer Gruppe (9) solche Objekte (8) zusortiert werden, deren Entfernung aus der ursprünglichen Position Fläche zur Anordnung weiterer Objekte (8) derselben Gruppe (9) schafft.

15. Verfahren nach einem der Ansprüche 11 bis 14,
**dadurch gekennzeichnet, daß** in einem Pufferspeicher Objekte (8) zur späteren Abholung und Gruppierung abgelegt werden, welche unter Berücksichtigung der vorgegebenen Sortiervorschriften als nur unter großem Handhabungsaufwand einem der augenblicklich vorgesehenen Kennobjekte (10) zuweisbar erkannt werden.

16. Verfahren nach einem der Ansprüche 1 bis 15,
**dadurch gekennzeichnet, daß** die Steuereinheit (5) die Objekte (8) gemäß einem vorgegebenen Gesamtzustand der Gruppen (9) jeweils einer Gruppe (9) zuordnet.

17. Verfahren nach Anspruch 16,
**dadurch gekennzeichnet, daß** die Erkennungseinrichtung (6) die Konturen der zugeführten Objekte (8) erfaßt und die Steuereinheit (5) aus der Kontur das jeweilige Volumen der Objekte (8) ermittelt, welches bei der Sortierung als Sortierkriterium berücksichtigt wird.

18. Verfahren nach einem der Ansprüche 1 bis 17,
**dadurch gekennzeichnet, daß** die Ausrichtung einer Gruppe (9) einer weiteren Handhabungseinrichtung (17) für eine an die Gruppierung anschließende Bearbeitung vorgegeben wird.

19. Verfahren nach Anspruch 18,
**dadurch gekennzeichnet, daß** die Ausrichtung der geordneten Gruppen (9) von einer weiteren Erkennungseinrichtung (12) erfaßt wird.

20. Verfahren nach Anspruch 18 oder 19,
**dadurch gekennzeichnet, daß** die Objekte (8) bei der anschließenden Bearbeitung gruppenweise gehandhabt werden.

21. Verfahren nach Anspruch 20,
**dadurch gekennzeichnet, daß** die weitere Handhabungseinrichtung (17) die Gruppen (9) vom Zuführband (1) abholt.

## Claims

1. Method of grouping objects (8) on an automated basis, which are fed in a constant flow in a random arrangement to a feeder convey (1) and conveyed to a grouping mechanism (2), whereby a detection system (6) detects the orientation and position of the objects (8) as they arrive on the feeder conveyor (1) and forwards these to a control unit (5), which takes account of the conveyor speed (n), for a manipulating mechanism (7), which sorts the objects (8) into groups,
**characterised in that** the objects (8) are grouped on the feeder conveyor (1) and conveyed onwards, whilst the control unit evaluates the random layout on the feeder conveyor (1) and determines the orientation of a group (9) on the feeder conveyor (1).

2. Method as claimed in claim 1,
**characterised in that** the objects (8) are densely packed in groups.

3. Method as claimed in claim 1 or 2,
**characterised in that** a predetermined orientation of the objects (8) within a group is pre-set in the control unit.

4. Method as claimed in one of claims 1 to 3,
**characterised in that** the objects (8) are placed together in a respective same orientation within a group (9).

5. Method as claimed in one of claims 1 to 4,
**characterised in that** the objects (8) are of the same type.

6. Method as claimed in one of claims 1 to 4,
**characterised in that** different types of objects (8) are grouped in groups (9) with a predeterminable combination of object types.

7. Method as claimed in one of claims 1 to 6,
**characterised in that** one or several group layouts, in which the objects (8) are to be grouped, are pre-set in the control unit (5).

8. Method as claimed in one of claims 1 to 7,
**characterised in that** one object is selected as a marker object (10), which determines the sorting position and the other objects (8) are sorted relative to it in accordance with the pre-set group layout.

9. Method as claimed in claim 8,
**characterised in that** the orientation of the marker object (10) is corrected if necessary

10. Method as claimed in claim 8 or 9,
**characterised in that** the other objects (8) of a group (9) are aligned to match the orientation of the marker object (10).

11. Method as claimed in one of claims 8 to 10,
**characterised in that** one or more sorting rules for grouping the objects (8) based on the orientation on the feeder conveyor (1) detected by the detection system (6) and a priority instruction, are pre-set in the control unit (5), on which basis the sequence in which the sorting rules are applied is fixed.

12. Method as claimed in claim 11,
**characterised in that** the objects assigned to a group are those whose orientation and position differs as little as possible from the corresponding marker object (10).

13. Method as claimed in claim 12,
**characterised in that**, when assigning objects (8) to a group, the individual objects (8) are manipulated in a sequence based on the random layout.

14. Method as claimed in claim 12 or 13,
**characterised in that** the objects (8) allocated to a group (9) during the sorting process are those which, when removed from the original position, make space for the placement of other objects (8) of the same group (9).

15. Method as claimed in one of claims 11 to 14,
**characterised in that** objects (8) which, on evaluation of the pre-set sorting rules, can not be allocated to one of the currently tagged marker objects (10) except by complex manipulations are placed in a buffer storage, to be collected and grouped subsequently.

16. Method as claimed in one of claims 1 to 15,
**characterised in that** the control unit (5) allocates the objects (8) respectively to a group (9) depending on a pre-set overall status of the groups (9).

17. Method as claimed in claim 16,
**characterised in that** the detection system (6) detects the contours of the conveyed objects (8) and the control unit (5) determines the respective volumes of the objects (8) from the contour, which is taken into account as a sorting criterion during the sorting process.

18. Method as claimed in one of claims 1 to 17,
**characterised in that** the orientation of a group (9) is pre-set in another manipulating mechanism (17) in readiness for subsequent processing after the grouping process.

19. Method as claimed in claim 18,
**characterised in that** the orientation of the ordered groups (9) is detected by another detection system (12).

20. Method as claimed in claim 18 or 19,
**characterised in that** the objects (8) are manipulated in groups during subsequent processing.

21. Method as claimed in claim 20,
**characterised in that** the other manipulating mechanism (17) picks up the groups (9) from the feeder conveyor (1).

## Revendications

1. Procédé de groupage automatisé d'objets (8), fournis en un flux de transport continu, dans un ordre de rangement aléatoire, à une bande d'alimentation (1) et transportés vers un dispositif de groupage (2), un dispositif d'identification (6) détectant l'orientation et la position des objets (8) arrivant sur la bande d'alimentation (1) et informant une unité de commande (5), prenant en compte la vitesse de bande (n), prévue pour un dispositif de manipulation (7) qui trie les objets (8) en un état de rangement groupé,
**caractérisé en ce que** les objets (8) sont groupés sur la bande d'alimentation (1) et retransportés, l'unité de commande évaluant l'état de rangement aléatoire sur la bande d'alimentation (1) et déterminant la position d'un groupe (9) sur la bande d'alimentation (1).

2. Procédé selon la revendication 1,
**caractérisé en ce que** les objets (8) sont groupés en paquets denses.

3. Procédé selon la revendication 1 ou 2,
**caractérisé en ce qu'**une orientation donnée des objets (8) à l'intérieur d'un groupe (9) est imposée de façon prédéterminée à l'unité de commande.

4. Procédé selon l'une des revendications 1 à 3,
**caractérisé en ce que** les objets (8).

5. Procédé selon l'une des revendications 1 à 4,
**caractérisé en ce que** les objets (8) sont de même type.

6. Procédé selon l'une des revendications 1 à 4,
**caractérisé en ce que** des objets (8) de types différents sont groupés pour former des groupes (9) dont les types d'objet sont en une combinaison susceptible d'être prédéterminée.

7. Procédé selon l'une des revendications 1 à 6,
**caractérisé en ce qu'**un ou plusieurs agencements de groupe, selon lesquels les objets (8) sont groupés, sont imposés à l'unité de commande (5).

8. Procédé selon l'une des revendications 1 à 7,
**caractérisé en ce qu'**un objet est sélectionné en tant qu'objet identifiant (10), déterminant la position de tri et auquel d'autres objets (8) sont adjoints de façon rangée, selon le rangement par groupes prédéterminé.

9. Procédé selon la revendication 8,
**caractérisé en ce que** l'orientation de l'objet identifiant (10) est corrigée en cas de besoin.

10. Procédé selon la revendication 8 ou 9,
**caractérisé en ce que** les autres objets (8) d'un groupe (9) sont rangés, en étant orientés comme l'est l'objet identifiant (10).

11. Procédé selon l'une des revendications 8 à 10,
**caractérisé en ce qu'**une ou plusieurs prescriptions de rangement, pour le groupage des objets (8) à l'aide de l'orientation, détectée par le dispositif d'identification (6), sur la bande d'alimentation (1), et une instruction de priorité, selon laquelle l'ordre de succession de la prise en compte des prescriptions de rangement est fixée, sont imposées à l'unité de commande (5).

12. Procédé selon la revendication 11,
**caractérisé en ce qu'**on associe, à un groupe, des objets (8) dont l'orientation et la position relative par rapport à l'objet identifiant (10) correspondant sont aussi peu différents que possible.

13. Procédé selon la revendication 12,
**caractérisé en ce que**, lors de l'association en groupe des objets (8), un ordre de succession, résultant de l'état d'agencement aléatoire des manipulations des différents objets (8) est pris en compte.

14. Procédé selon la revendication 12 ou 13,
**caractérisé en ce qu'**à un groupe (9) on adjoint par un rangement des objets (8) dont la distance, par rapport à la position initiale, crée de la surface pour agencer d'autres objets (8) du même groupe (9).

15. Procédé selon l'une des revendications 11 à 14,
**caractérisé en ce que**, dans un accumulateur tampon, sont déposés des objets (8) devant être prélevés et groupés ultérieurement, qui, en prenant en compte les prescriptions de rangement prédéterminées, sont identifiés comme n'étant affectables à l'un des objets identifiant (10), prévu au moment donné, qu'au prix d'un grand déploiement de manipulations.

16. Procédé selon l'une des revendications 11 à 15,
**caractérisé en ce que** l'unité de commande (5) affecte les objets (8) chaque fois à un groupe (9), selon un état global prédéterminé des groupes (9).

17. Procédé selon la revendication 16,
**caractérisé en ce que** le dispositif d'identification (6) détecte les contours des objets (8) amenés et l'unité de commande (5), à partir du contour, détermine le volume spécifique des objets (8), pris en compte comme critère de rangement, lors du processus de rangement.

18. Procédé selon l'une des revendications 1 à 17,
**caractérisé en ce que** l'orientation d'un groupe (9) est imposée à un autre dispositif de manipulation (17) devant assurer un traitement subséquent au groupage.

19. Procédé selon la revendication 18,
**caractérisé en ce que** l'orientation des groupes (9) rangés est détectée par un autre dispositif d'identification (12).

20. Procédé selon la revendication 18 ou 19,
**caractérisé en ce que** les objets (8) sont manipulés par groupes lors du façonnage subséquent.

21. Procédé selon la revendication 20,
**caractérisé en ce que** le dispositif de manipulation (17) supplémentaire prélève les groupes (9) depuis la bande d'alimentation (1).
